# EUROPEAN PATENT APPLICATION

(11) **EP 4 282 262 A1**
(43) Date of publication of application: **29.11.2023**
(21) Application number: 22174740.5
(22) Date of filing: 23.05.2022
(51) Int. Cl.: A01K 13/00, A01K 1/00, E04H 5/08

(54) **SYSTEM FOR TREATING AND ADMINISTERING HORSES**

(71) Applicant: Grohe AG, 58675 Hemer (DE)
(72) Inventor: Bühl, Alexander, 40476 Düsseldorf (DE); Debashish, Das, 40545 Düsseldorf (DE); Raulino, Rafael, London, SW20 0BJ (GB); Kristensen, Ebbe, 2319 Hamar (NO)

(57) **Abstract**

This invention relates to a system for treating and administering horses (1) comprising a treatment compartment (2) and an administration compartment (3), whereby the treatment compartment (2) is dimensioned to accommodate a horse (1) and comprises an entry gate (4) for a horse (1), whereby the administration compartment (3) is dimensioned to accommodate a person (7) and comprises an entry door (8) for a person (7), whereby the treatment compartment (2) comprises a wet-cleaning module (10).

## Description

This invention relates to a system for treating and administering horses. The system is useful for various people dealing with horses, such as horse owners, horse riders, equestrians, horse stable owners, veterinarians or blacksmiths, in various use case scenarios, such as before and after training as well as before and after competition.

Prior art systems for treating horses include some means for providing treatments for horses before and after training and competition, respectively. However, the known treatment systems do not provide means for administering horses. Instead, administration activities, such as doing paperwork or maintaining the equipment, need to be performed in an office or in a utility room at distant places. On the other hand, prior art systems for administering horses include some means for getting the paperwork done or maintaining the equipment before and after training and competition, respectively. However, the known administering systems do not provide means for treating horses. Rather, the horse treatments need to be performed in a stable at a distant place. On yet another hand, prior art transportation systems for horses, for example horse boxes or horse trucks, provide only basic functionalities that do not fully meet the specialized needs of horse owners, horse riders, equestrians, horse stable owners, veterinarians or blacksmiths.

None of the known systems in the prior art is a one stop system with a wide range of functionalities for both treating and administering horses. The known systems lack either treatment functionality or administration functionality or provide only basic functionalities.

Therefore, the objective of the present invention is to provide a solution to the aforementioned shortcomings of the known systems and particularly to provide a versatile system at a single place for treating and administering horses with a wide range of functionalities that is comfortable for both horses and people.

The present invention is directed to an improved system for both treating and administering horses at a single place according to Claim 1. Embodiments of the present invention arise from the dependent Claims.

The system for treating and administering horses according to the present invention comprises a treatment compartment, also known as preparation area, and an administration compartment, also known as multipurpose area, whereby the treatment compartment is dimensioned to accommodate a horse and comprises an entry gate for a horse, whereby the administration compartment is dimensioned to accommodate a person and comprises an entry door for a person, whereby the treatment compartment comprises a wet-cleaning module, also known as non-dry cleaning module or water based cleaning module, for washing horses and equipment. The wet-cleaning module can comprise a horse shower. The horse shower can comprise a stiff shower arm with a water outlet. The shower arm can be 0.2 to 2.0 m in length. The entry gate provides a way for horses and people to enter and exit the treatment compartment quickly and comfortably. The entry door provides a way for people to enter and exit the administration compartment quickly and comfortably. The entry gate and/or the entry door can be a sliding door.

The inventive system can comprise a washing machine, especially an industrial size washing machine for professional laundry, and/or a dryer, also known as tumble dryer, especially an industrial size dryer for professional laundry. The washing machine can be adapted to weigh the load put into the washing machine and then adjust the amount of water to the actual load. This saves both water and energy. The washing machine can also comprise means for correcting unbalances in order to for example reduce washing time. The dryer can comprise a lint filter, a moisture balance and/or a reversing drum. This yields high quality results of the drying process, helps to stop the drying process at the right time to save on energy costs and helps to minimize wrinkles as well as to reduce drying time. With the help of the washing machine and/or the dryer clothes as well as equipment, especially horse blankets, can be cleaned before and after training as well as before and after competition in an efficient manner.

The inventive system can comprise a window for providing daylight and natural light. This potentially calms the horses and gives natural feedback to the people.

The inventive system can also comprise means for storing the people's equipment, for example a shelf, a hanger, a rack and/or a dedicated place for at least one saddle. The inventive system can also comprise a working bench for crafting as well as for storing the people's tools and instruments.

Furthermore, the inventive system can comprise a rubber mat on the floor for improved safety due to its slip resistance, for improved cleanliness due to its showerproof nature and for improved cleanability due to its surface texture. Moreover, the rubber mat functions as a noise-absorber and reduces the risk of injury for both horses and people.

The inventive system can be container-shaped or cuboid-shaped. It can comprise an outer wall, whereby the outer wall is arranged around both the treatment compartment and the administration compartment. The outer wall can comprise at least four outer wall elements. The outer wall elements can be planar-shaped. The inventive system can comprise an inner wall, whereby the inner wall is arranged between the treatment compartment and the administration compartment. The inner wall can comprise at least one inner wall element. The inner wall element can be planar-shaped. The wall elements help to segregate the inventive system into the treatment compartment and administration compartment. The wall elements also help to segregate the compartments into specific subareas.

The entry door can be arranged in the outer wall or in the inner wall. The inventive system can comprise an entry door, whereby the further entry door can be arranged in the inner wall in case the entry door is arranged in the outer wall and vice versa. The further entry door can be a sliding door. In case the entry door or the further entry door is arranged in the inner wall this door provides a way for people to quickly and comfortably change rooms, i.e. to walk from the treatment compartment to the administration compartment and vice versa as quickly as possible in order to save time and as comfortably as possible in order to reduce the possible stress level. The administration compartment can be entered by people from inside the inventive system, i.e. from the treatment compartment, in case the one of the doors is arranged in the inner wall or from outside the inventive system in case one of the doors is arranged in the outer wall. The entry gate, the entry door and/or the further entry door can comprise a swing door operator. The swing door operator can be electromechanical and can be adapted to operate at low sound or noise level. The swing door operator allows for smooth but strong operation of the gate or door. The entry gate, the entry door and/or the further entry door can comprise a key lock in order to lock the inventive system and to prevent unauthorized persons from entering the inventive system.

The inventive system is a one stop system with a wide range of functionalities for both treating and administering horses. In contrast to the known systems in the prior art it provides functionalities for both treating and administering horses at a single place. Thus, people dealing with horses do not need to travel between places dedicated to treating horses and places dedicated to administering horses anymore. The inventive system can be adapted to provide a dedicated space for one horse, so that the horse will not be distracted or stressed by other horses or by environmental effects.

Moreover, the inventive system can be prefabricated, i.e. it can be manufactured completely in advance by the manufacturer and before installation. After prefabrication the system then is ready to be delivered or shipped to the installation site, and therefore it is easier to be installed as compared to an approach including both manufacturing and installation at the installation site. The prefabrication and easy installation of the inventive system simplifies the logistics and the time management process as compared to building, i.e. manufacturing and installation, an entirely new structure at the installation site.

Another advantage of the inventive system is its capability to adapt to different use case scenarios. For example, horse owners may use the inventive system as a remote singleton stable for horses that receive special treatment or horses that need a quarantine room. Horse owners, horse riders, equestrians, horse stable owners, veterinarians or blacksmiths may use the inventive system to work in the context of horse treatment as well as in the context of horse administration at a single location, where the treatment compartment and the administration compartment are right next to each other. The inventive system may also be used as a temporary solution to compensate for shortage of space for horses.

In one embodiment of this invention the wet-cleaning module comprises a water hose with a water outlet and a sewage system, also known as drainage system. The water hose can be flexible, i.e. made of an elastic material, such as rubber-like material. The water outlet can be adapted to control the water pressure coming out of the water hose. The water hose with the water outlet enables people to wet-clean or wash horses by hand in a customized manner. This way, spots that are generally difficult to access can be accessed easily. Moreover, due to the sewage system the water used for wet-cleaning the horses flows off in a precise and directed manner. This helps to keep the treatment compartment tidy and clean. The water used for wet-cleaning the horses can be recycled and can be reused as graywater. The water recycling, i.e. the sewage water cleaning, can be performed inside or outside the inventive system. In case the water recycling is performed inside the inventive system the wet-cleaning module comprises a water filter.

In Addition, the wet-cleaning module can comprise a water tank for fresh water, a water heater, a shower arm, a high-pressure washer, a water filter and/or a water injector. The water heater can be adapted to warm up or heat the fresh water that is dedicated for washing the horse in order to create a comfortable experience for the horse as well as for washing equipment. To this end the water heater can comprise an electric heating element and a water temperature controller. The water heater can be adapted to heat the water to 60 to 90 degree Celsius, especially to 70 to 75 degree Celsius. Water temperatures of 60 degree Celsius and above help to kill germs, bacteria and single cell microorganisms efficiently. Water temperatures of 70 to 75 degree Celsius are particularly helpful regarding a trade-off between killing germs, bacteria and single cell microorganisms and saving heating energy. Moreover, the water heater can comprise a flip-flop function in order to allow extra fast heating. The water heater can also comprise a hot water draw-off temperature in order to prevent scalding. The shower arm can comprise a pivotable, sturdy pipe of 0.5 to 3.0 m in length with a decent bending strength. The shower arm facilitates the process of wet-cleaning for people washing the horses as they may pivot the shower arm instead of holding the water hose and/or the water outlet all the time in their hands.

The high-pressure washer, also known as water blaster, can comprise a three-piston axial pump. The high-pressure washer can be adapted to be operated at 60 to 180 bar of pressure to ensure versatile and high quality results. The high-pressure washer can comprise a water filter for filtering out particles in the water in order to allow for a safe and long-lasting operation. The high-pressure washer can be adapted for mounting on any of the system's wall. This facilitates an easy-to-use approach of the high-pressure washer and it saves room on the system's floor.

The water filter can be incorporated in the sewage system of the inventive system. Alternatively, the water filter can be incorporated in an underground water sewage system. The water filter can be adapted to filter out material such as straw, hay, hair or the like, that may get into the water during the wet-cleaning process, from the water that is flown into the sewage system. The water filter serves to recycle the water flown into the sewage system at least to some extend. The water recycled that way is also known as graywater and may be used again in the process of wet-cleaning. The water injector is adapted to add specific water additions to the fresh water or graywater, for example for enhancing the quality of the process of wet-cleaning.

In another embodiment of this invention the treatment compartment comprises a foldable side rack, also known as horse stock. The side rack can comprise a first subframe arranged to the left of the horse and a second subframe arranged to the right of the horse. The side rack serves as a guidance and orientation aid for horses. This helps to calm the horses. In addition, the side rack serves as a supporting structure for people. Horses are supposed to stand within the side rack, especially in between the first and second subframe. The side rack can be of 0.5 to 2.0 m in height and of 0.5 to 3.0 m in length. The side rack can be solid, i.e. without any aperture, or lattice-like, i.e. with at least one aperture. In case of lattice-like side racks people may make use of the at least one aperture by reaching through the at least one aperture to the horse. The foldable side rack is adapted to be folded in and to be folded out. In case the side rack is folded out it is beneficial to both horses and people working with horses in the abovementioned manner. In case the side rack is folded in it will not get into people's way and it will not disturb any action of people. The foldable side rack can be adapted to be folded into the floor or into the wall of the treatment compartment. The foldable side rack saves space when it is not needed, and it potentially reduces the risk of injury for both horses and people.

The foldable side rack can comprise a side spray for spraying water. The foldable side rack can comprise at least one side spray or any number of side sprays. In case of a foldable side rack comprising two or more side sprays it is advantageous to distribute the side sprays along the whole height of the foldable side rack and along the whole length of the foldable side rack in order to equally distribute the water onto the horse. The side spray is directed onto the horse standing within the foldable side rack and is adapted to spray fresh water and/or graywater sideways, upwards and/or downwards onto the horse. Using graywater in this context is beneficial regarding saving water. The side spray can be integrated into the foldable side rack. Horses usually cannot stand it when they got sprayed from above with water. Therefore, the side spray significantly helps to calm the horses while washing the horse.

In another embodiment of this invention the treatment compartment comprises a dry-cleaning module, i.e. a non-water cleaning module. The dry-cleaning module can comprise means to remove debris, such as salt, dirt or hair, from horses, especially from horse hoofs, and from equipment, for example horse blankets, without the use of water. The dry-cleaning module can comprise an electric horse grooming machine to trim the horse's fur or coat, an electric horse grooming machine with vacuum cleaning functionality or a vacuum cleaning machine. The vacuum cleaning is preferably at a low or decent sound or noise level, such as 50 to 70 dB, to prevent increasing stress level of horses and people. The electric horse grooming machine and the vacuum cleaning machine can be dimensioned to be hold by people in one hand and can be adapted to be switched on and off manually by people.

In another embodiment of this invention the treatment compartment comprises an air conditioning module. The air conditioning module can comprise a temperature control submodule and/or humidity control submodule. The temperature control submodule can comprise a cooling functionality with means to decrease the room temperature. By exposing horses and/or people to a decreased, i.e. low or cold, room temperature, the body temperature of horses as well as the body temperature of people naturally and gradually decrease. The temperature control submodule can also comprise a heating functionality with means to increase the room temperature. By exposing horses and/or people to an increased, i.e. high or warm, room temperature, the body temperature of horses as well as the body temperature of people naturally and gradually increase. The temperature control submodule is beneficial when it comes to ensuring a suitable and constant room temperature in different seasons over the year as well as at different regions and climate zones over the globe. This is helpful for creating a constant comfort level and for reducing the stress level of both horses and people.

The air conditioning module can comprise a fan and/or a ventilation system. This helps to quickly dry the horse after the horse was wet-cleaned or after rain and helps to quickly dry equipment. The ventilation system can be adapted to have an air capacity of up to 50 m³/h. The humidity control submodule is beneficial when it comes to ensure a suitable and constant room humidity in different seasons over the year as well as at different regions and climate zones over the globe. This is also helpful for creating a constant comfort level and for reducing the stress level of both horses and people.

In another embodiment of this invention the treatment compartment comprises a solarium element, also known as equestrian heater or IR heater. The treatment compartment can comprise two, four, six or eight solarium elements. Multiple solarium elements can be arranged evenly at each side of the treatment compartment, for example one solarium element at each side of the treatment compartment in case the treatment compartment comprises two solarium elements. The solarium element can be adapted to be waterproof to avoid damages due to any contact of the solarium element with water. The solarium element helps to warm up the horse's muscles, which improves the horse's relaxation, curative treatments and rehabilitation. It also helps to reduce the risk of injury for the horse. Moreover, the solarium element helps to dry the horse efficiently.

In another embodiment of this invention the treatment compartment comprises a training module. The training module can comprise a treadmill, means for aqua training and/or the like.

In another embodiment of this invention the treatment compartment comprises a feeding module. The feeding module can comprise a drinking water tank and/or a hay net.

In another embodiment of this invention the treatment compartment comprises an illumination module. The illumination module can comprise a controlled light source, such as a lamp, a LED lamp or a LED strip light, a spotlight or a light panel. Examples include dimmable light sources, ambient light sources for calming the horse and extra bright light sources for example for veterinarians. The illumination module can comprise light sources that are arranged in the ceiling of the treatment compartment and/or in the wall at a high level close to the ceiling of the treatment compartment. The illumination module can also comprise light sources that are arranged in the wall at a low level close to the floor of the treatment compartment. The illumination module is therefore versatile in different use case scenarios.

In another embodiment of this invention the treatment compartment comprises an UV-C, also known as ultraviolet C, light source at wavelengths between 200 and 230 nm, particularly between 220 and 225 nm, more particularly 222 nm. UV-C light is electromagnetic radiation with wavelengths between 100 and 280 nm which is germicidal. UV-C light is invisible for humans. The UV-C light source at wavelengths between 200 and 230 nm, particularly between 220 and 225 nm, more particularly 222 nm, is germicidal on the one hand, i.e. it kills or inactivates microorganisms, such as viruses and bacteria, efficiently and is human-safe and animal-safe on the other hand. Therefore, the UV-C light source allows for efficient but human- and animal-safe disinfection of horses by irradiating the horses with the UV-C light. The disinfection in turn allows for an improved curative treatment of horses suffering from microorganisms, such as viruses and bacteria.

In another embodiment of this invention the treatment compartment comprises a sound module. The sound module can comprise a speaker, also known as loudspeaker. The sound module allows to play ambient music or sounds to calm horses as well as any kind of music or sounds for entertainment or information purposes of people.

In another embodiment of this invention the treatment compartment comprises a fixation module. The fixation module can comprise means or fixing points for fixing horses, for example hooks for ropes in the walls and/or in the die side rack. This helps to calm the horses and potentially reduces the risk of injury for both horses and people.

In another embodiment of this invention the system comprises a horse blanket cleaning module, comprising a washing machine, especially an industrial size washing machine, and a horse blanket drying rack for drying horse blankets, whereby the horse blanket drying rack is foldable. The horse blanket cleaning module can be adapted to be completely integrated into a wall unit so that it is concealed, i.e. not visible as such, especially in a manner of a fitted cabinet. The horse blanket drying rack can be adaptable for holding one to ten horse blankets, especially four horse blankets. The horse blanket cleaning module, especially the cabinets with the washing machine and the foldable horse blanket drying rack can comprise an air conditioning functionality to suck out or drain heated and humid air. This helps to avoid damage due to heat and humidity.

With the help of the horse blanket cleaning module people may operate as follows. They may open the washing machine, put the soiled horse blanket into the washing machine, where the horse blanket gets washed, open the washing machine again, get the cleaned but wet horse blanket out of the washing machine, close the washing machine, open the foldable horse blanket drying rack, i.e. fold out the foldable horse blanket drying rack, hang the clean but wet horse blanket onto the horse blanket drying rack, close the foldable horse blanket drying rack, i.e. fold in the foldable horse blanket drying rack, where the horse blanket gets dried by the air conditioning functionality of the foldable horse blanket drying rack, open the foldable horse blanket drying rack again, get the cleaned and dry horse blanket out of the foldable horse blanket drying rack, close the foldable horse blanket drying rack.

In another embodiment of this invention the system comprises a motion sensing device for opening or activating the entry gate and/or the entry door when detecting an object's motion or movement. The motion sensor can be adapted to detect people's feet, i.e. the motion or movement of the foot of a person. This allows the people for carrying things with both their hands and to focus on what they are doing with their hands, instead of considering that they need one free hand to open the gate or the door. This is potentially time saving and potentially reduces the risk of injury for both horses and people.

In another embodiment of this invention the administration compartment comprises a bathroom, a kitchen and/or an office. The bathroom can comprise sinks and sanitary fittings. The kitchen can comprise a fridge, also known as refrigerator, an ice box, sinks and sanitary fittings, such as GROHE Red and Blue. The fridge can be an under-worktop type of installation. The office can comprise a table or a desk. This serves the inventive system's purpose being a one stop solution, because everything of the people's importance to work is concentrated at one single place. People may take a shower in the bathroom, cook a meal in the kitchen and/or do paperwork in the office.

In another embodiment of this invention the system comprises a solar panel for energy supply. With the help of the solar panel the inventive system is stand-alone, i.e. independent of energy supply infrastructure at the installation site.

The inventive system can be modular, so that it can provide a wide range of functionalities. The modules, their submodules, their devices and their functionalities can be attached to a smart home control. This allows for easy, quick and comfortable operation of the system. The inventive system can also comprise means for establishing an internet connection in order to manage modules and functionalities of the inventive system from any place.

The present invention and its further advantages will be explained in more detail in connection with the accompanying drawings depicting embodiments of this invention. Note that the present invention is not limited to the depicted embodiments. Note also that identical elements within the drawings get identified with identical reference signs so that identical elements get a designated reference sign only once as a matter of principle. Note also that features present in one embodiment generally can be part of any other embodiment depicted in the drawings.
- Figure 1: is a side view of the inventive system according to a first embodiment omitting a side outer wall element,
- Figure 2: is an inside view of the treatment compartment of the inventive system according to a second embodiment,
- Figure 3: is another inside view of the treatment compartment of the inventive system according to the embodiment of Figure 2,
- Figure 4: is a detail view of the shower arm,
- Figure 5: is an inside view of the administration compartment of the inventive system according to a third embodiment,
- Figure 6: is another inside view of the administration compartment of the inventive system according to the embodiment of Figure 5.

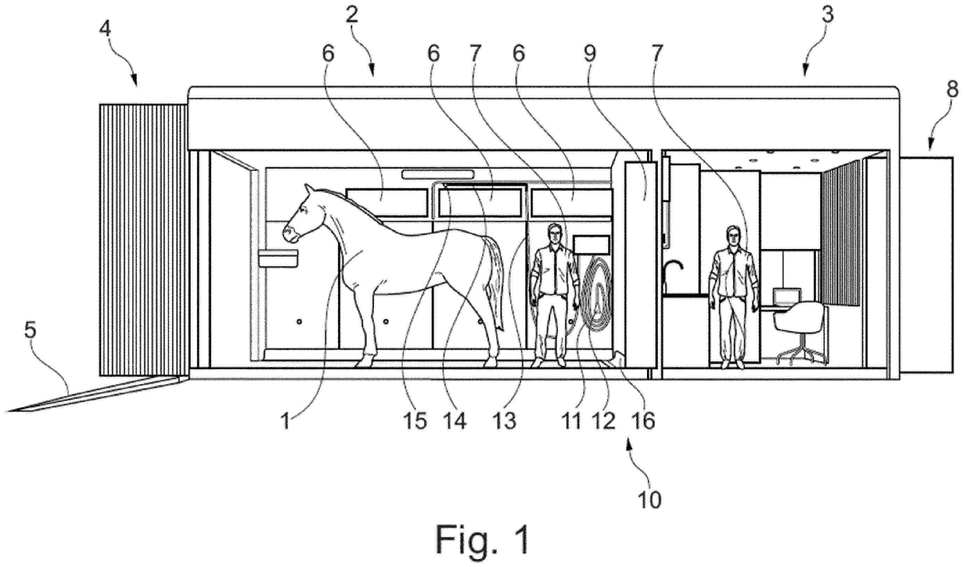

Figure 1 represents the inventive system according to a first embodiment. For the sake of clarity and concise depiction, the outer wall element of the system facing the viewer is omitted.

The system serves for treating and administering horses 1 and comprises a treatment compartment 2 and an administration compartment 3. The system is generally container- or cuboid-shaped and comprises an outer wall arranged around both the treatment compartment 2 and the administration compartment 3. It also comprises an inner wall arranged between the treatment compartment 2 and the administration compartment 3.

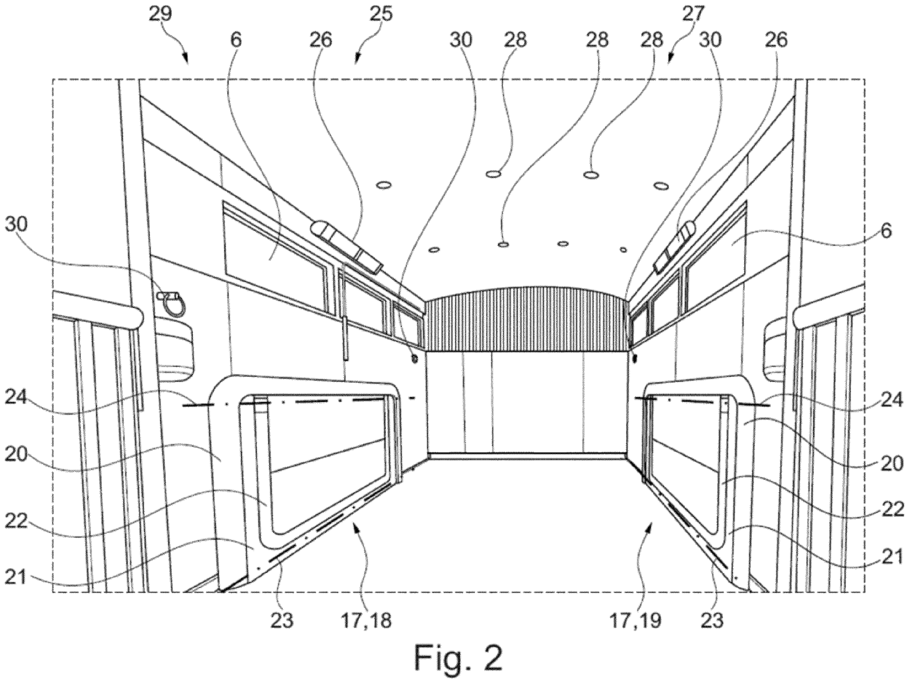

The treatment compartment 2 is dimensioned to accommodate a horse 1 and comprises an entry gate 4 for a horse 1 so that horses 1 may enter the treatment compartment 2 quickly and comfortably. A ramp 5 allows horses 1 to access the treatment compartment 2 even more comfortably. The treatment compartment 2 comprises six openable windows 6 in total, namely three windows 6 in the outer wall at each side of the treatment compartment 2 (cf. Figure 2).

The administration compartment 3 is dimensioned to accommodate a person 7 and comprises an entry door 8 for a person 7 so that people 7 may enter the administration compartment 3 quickly and comfortably. The administration compartment 3 comprises a further entry door 9 that is arranged in the inner wall, i.e. between the treatment compartment 2 and the administration compartment 3. Therefore, people 7 may enter the administration compartment 3 either from outside the system through the entry door 8 or from inside the system through the further entry door 9. People 7 may switch rooms between the treatment compartment 2 and the administration compartment 3 through the further entry door 9.

The treatment compartment 2 also comprises a wet-cleaning module 10. The wet-cleaning module 10 serves for the purposes to wash horses 1 as well to wash equipment if needed. The wet-cleaning module 10 comprises a flexible water hose 11 with a water outlet 12 that can be operated by one hand of a person 7. The wet-cleaning module 10 also comprises a further flexible water hose 13 with a stiff shower arm 14 and a further water outlet 15 that can be operated by two hands of a person 7. Moreover, the wet-cleaning module 10 comprises a sewage system 16 that is integrated in the floor of the treatment compartment 2.

Figure 2 represents the treatment compartment 2 of the inventive system according to a second embodiment while there is no horse 1 present in the treatment compartment 2.

The treatment compartment 2 comprises a foldable side rack 17 with a first subframe 18 and a second subframe 19. The first subframe 18 is arranged at the outer wall at one side of the treatment compartment 2 and the second subframe 19 is arranged at the outer wall at the other side of the treatment compartment 2. Each subframe 18, 19 comprises a stationary subframe element 20 that is fixed to the outer wall of the treatment compartment 2, a first pivotable subframe element 21, a second pivotable subframe element 22, a first horizontal axis of rotation 23 and a second horizontal axis of rotation 24. The first horizontal axis of rotation 23 pivotably connects the stationary subframe element 20 and the first pivotable subframe element 21. The first pivotable subframe element 21 is adapted to be turned by an angle of 90 degrees onto the floor of the treatment compartment 2, i.e. horizontal, via the first horizontal axis of rotation 23. The second horizontal axis of rotation 24 pivotably connects the first pivotable subframe element 21 and the second pivotable subframe element 22. The second pivotable subframe element 22 is adapted to be turned by an angle of 90 degrees perpendicular to the floor of the treatment compartment 2, i.e. vertical, via the second horizontal axis of rotation 24. As in Figure 2 there is no horse present in the treatment compartment 2 the foldable side rack 17 is not in use and therefore is folded in to save space in the treatment compartment 2.

The treatment compartment 2 comprises three windows 6 in the outer wall at each side of the treatment compartment 2 at a high level close to the ceiling. The windows 6 can be opened or closed if needed.

The treatment compartment 2 comprises an air conditioning module 25 and four solarium elements 26. Two solarium elements 26 are arranged at each side of the treatment compartment 2. The solarium elements 26 help to relax the muscles of horses 1 and to quickly dry horses 1.

The treatment compartment 2 comprises an illumination module 27 with several dimmable light sources 28 that are arranged in and evenly spread across the ceiling of the treatment compartment 2.

The treatment compartment 2 comprises a fixation module 29 with four fixation points 30 each arranged in every corner of the cuboid-shaped treatment compartment 2.

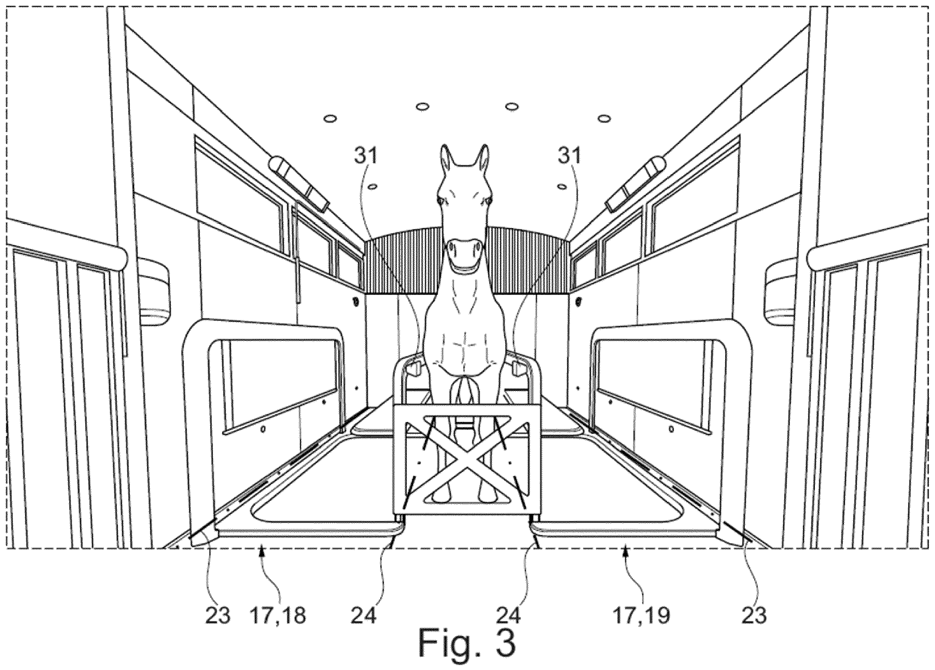

Figure 3 represents the treatment compartment 2 of the inventive system according to the embodiment of Figure 2 while there is a horse 1 present in the treatment compartment 2.

The foldable side rack 17 is folded out. It serves as guidance and orientation aid for the horse 1 as well as supporting structure for people 7 working with the horse 1. The foldable side rack 17 comprises four side sprays 31 for spraying water directed onto the horse 1 standing within the foldable side rack 17. Each subframe 18, 19 comprises two side sprays 31, whereby one side spray 31 of each subframe 18, 19 is arranged at the front of the horse 1, i.e. front/rear side of the treatment compartment 2, and whereby the other side spray 31 of each subframe 18, 19 is arranged at the rear of the horse 1, i.e. rear/front side of the treatment compartment 2. In Figure 3 only side sprays 31 at the front of the horse at each subframe 18, 19 are depicted.

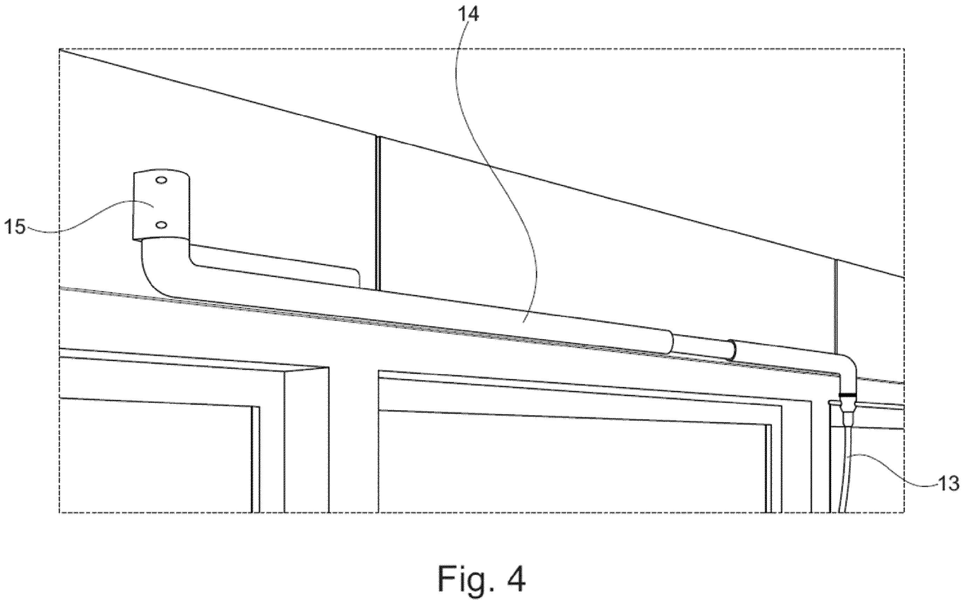

Figure 4 represents the shower arm 14 of the wet-cleaning module 10 in more detail.

The shower arm 14 is detachably arranged at the outer wall of the treatment compartment 2 at a high level between the windows 6 and the ceiling of the treatment compartment 2. The shower arm 14 is adapted to be snapped-in and snapped-out a wall mounting for easy access.

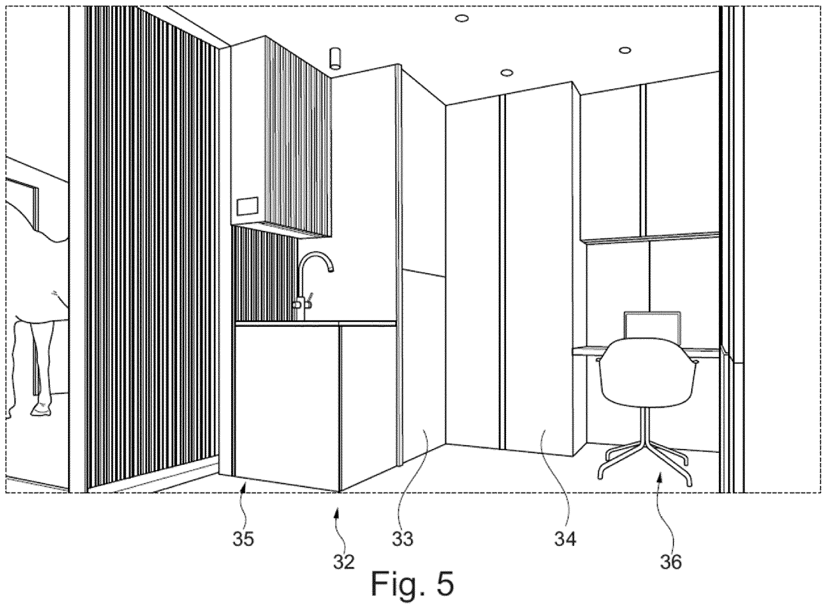

Figure 5 represents the administration compartment 3 of the inventive system according to a third embodiment.

The administration compartment 3 comprises a horse blanket cleaning module 32, comprising a washing machine 33 that is integrated and concealed in a wall unit of the administration compartment 3 and a foldable horse blanket drying rack 34 for drying horse blankets that is also integrated and concealed in the wall unit. The horse blanket drying rack 34 in Figure 5 is folded in, i.e. not visible as such.

The administration compartment 3 also comprises a minimalistic kitchen 35 with a sink and sanitary fittings for fresh water and a minimalistic office 36 with a desk for placing a laptop computer or the like onto it and a chair.

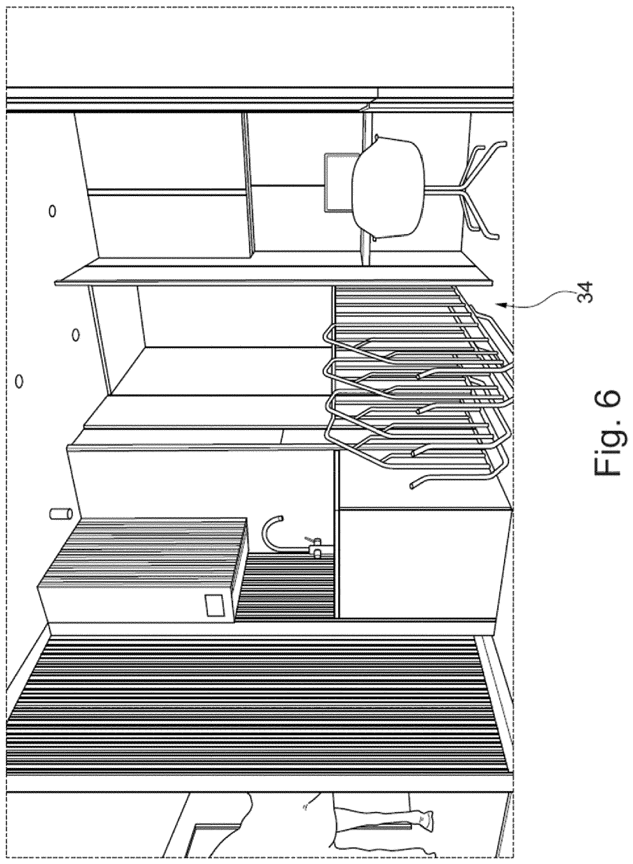

Figure 6 represents the administration compartment 3 of the inventive system according to the embodiment of Figure 5.

The horse blanket drying rack 34 of the horse blanket cleaning module 32 in Figure 6 is folded out, i.e. visible as such. The horse blanket drying rack 34 is adapted to hold four horse blankets. The foldable horse blanket drying rack comprises an air conditioning functionality to heat and to suck out heated and humid air in order to quickly dry the horse blankets.

### List of reference signs

- 1: horse
- 2: treatment compartment
- 3: administration compartment
- 4: entry gate
- 5: ramp
- 6: window
- 7: person/people
- 8: entry door
- 9: further entry door
- 10: wet-cleaning module
- 11: water hose
- 12: water outlet
- 13: further water hose
- 14: shower arm
- 15: further water outlet
- 16: sewage system
- 17: foldable side rack
- 18: first subframe
- 19: second subframe
- 20: stationary subframe element
- 21: first pivotable subframe element
- 22: second pivotable subframe element
- 23: first horizontal axis of rotation
- 24: second horizontal axis of rotation
- 25: air conditioning module
- 26: solarium element
- 27: illumination module
- 28: light source
- 29: fixation module
- 30: fixation point
- 31: side spray
- 32: horse blanket cleaning module
- 33: washing machine
- 34: horse blanket drying rack
- 35: kitchen
- 36: office

## Claims

1. System for treating and administering horses (1) comprising a treatment compartment (2) and an administration compartment (3), whereby the treatment compartment (2) is dimensioned to accommodate a horse (1) and comprises an entry gate (4) for a horse (1), whereby the administration compartment (3) is dimensioned to accommodate a person (7) and comprises an entry door (8) for a person (7), whereby the treatment compartment (2) comprises a wet-cleaning module (10).

2. System according to Claim 1, whereby the wet-cleaning module (10) comprises a water hose (11, 13) with a water outlet (12, 15) and a sewage system (16).

3. System according to one of the abovementioned Claims, whereby the treatment compartment (2) comprises a foldable side rack (17).

4. System according to Claim 3, whereby the foldable side rack (17) comprises a side spray (31).

5. System according to one of the abovementioned Claims, whereby the treatment (2) compartment comprises a dry-cleaning module.

6. System according to one of the abovementioned Claims, whereby the treatment compartment (2) comprises an air conditioning module (25).

7. System according to one of the abovementioned Claims, whereby the treatment compartment (2) comprises a solarium element (26).

8. System according to one of the abovementioned Claims, whereby the treatment compartment (2) comprises a training module.

9. System according to one of the abovementioned Claims, whereby the treatment compartment (2) comprises a feeding module.

10. System according to one of the abovementioned Claims, whereby the treatment compartment (2) comprises an illumination module (27).

11. System according to one of the abovementioned Claims, whereby the treatment compartment (2) comprises an UV-C light source at wavelengths between 200 and 230 nm.

12. System according to one of the abovementioned Claims, whereby the treatment compartment (2) comprises a sound module.

13. System according to one of the abovementioned Claims, whereby the treatment compartment (2) comprises a fixation module (29).

14. System according to one of the abovementioned Claims, comprising a horse blanket cleaning module (32), comprising a washing machine (33) and a horse blanket drying rack (34) for drying horse blankets, whereby the horse blanket drying rack (34) is foldable.

15. System according to one of the abovementioned Claims, comprising a motion sensing device for opening the entry gate (4) and/or the entry door (8, 9) when detecting an object's motion.

16. System according to one of the abovementioned Claims, wherein the administration compartment (3) comprises a bathroom, a kitchen (35) and/or an office (36).

17. System according to one of the abovementioned Claims, comprising a solar panel for energy supply.
